# EUROPÄISCHE PATENTSCHRIFT

(11) **EP 3 335 543 B1**
(45) Veröffentlichungstag und Bekanntmachung des Hinweises auf die Patenterteilung: **06.10.2021**
(21) Anmeldenummer: 17188220.2
(22) Anmeldetag: 29.08.2017
(51) Int. Cl.: A01F 7/06, A01F 12/10

(54) **AUSTAUSCHBARES UND/ODER VERSTELLBARES EINLAUFSEGMENT FÜR EINEN MÄHDRESCHER MIT AXIALROTOR**
REPLACEABLE AND/OR ADJUSTABLE INLET SEGMENT FOR AN AGRICULTURAL COMBINE WITH AXIAL ROTOR
SEGMENT D'ENTRÉE ÉCHANGEABLE ET/OU AJUSTABLE POUR UNE MOISSONNEUSE-BATTEUSE À ROTOR AXIAL

(30) Priorität: 16.12.2016 DE 102016124582
(43) Veröffentlichungstag der Anmeldung: 20.06.2018
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)
(74) Vertreter: CLAAS Gruppe

(56) Entgegenhaltungen:
- EP-A1- 0 230 276
- EP-A1- 1 470 749
- EP-A1- 2 965 614
- EP-A2- 2 774 474

## Beschreibung

Die vorliegende Erfindung betrifft einen selbstfahrenden Mähdrescher mit einer Abscheidevorrichtung, die zumindest einen Axialrotor umfasst, und einer Zuführtrommel, die der Abscheidevorrichtung vorgeordnet und zum Zuführen eines Erntegutstromes in die Abscheidevorrichtung vorgesehen ist, wobei der Zuführtrommel ein Einlaufsegment zugeordnet ist. Die vorliegende Erfindung betrifft weiterhin ein Verfahren zum Steuern eines solchen Mähdreschers.

Bei solchen Mähdreschern wird das Erntegut über die Zuführtrommel der Abscheidevorrichtung zugeführt, in der die Körner oder Früchte von Stroh und Halmen getrennt werden. Die Abscheidevorrichtung kann einen einzigen oder mehrere parallel nebeneinanderliegende Kanäle aufweisen, in denen jeweils ein Axialrotor angeordnet ist. Um einer Abscheidevorrichtung mit mehreren Kanälen und Axialrotoren den Erntegutstrom optimal zu zuführen, weist die Zuführtrommel häufig Schneckenbleche auf, die so angeordnet und/oder geformt sind, dass sie den Erntegutstrom vor dem Eintreten in die Abscheidevorrichtung in der Anzahl der Axialrotoren entsprechende Teilströme trennen. Die Druckschrift EP 2 965 614 A1 offenbart einen selbstfahrenden Mähdrescher mit einer solchen Zuführtrommel.

Die Axialrotoren können sowohl zum Dreschen und zum Abscheiden als auch nur zum Abscheiden ausgebildet sein. Mähdrescher mit solchen Axialrotoren sind im Folgenden als Axialrotormaschinen bezeichnet. Es sind aber auch Hybridmaschinen bekannt, die ein dem Axialrotor vorgeordnetes Dreschwerk umfassen. Bei solchen Hybridmaschinen erstrecken sich die Trommeln des Dreschwerks zumeist quer zum Axialrotor. Die Zuführtrommel ist dann zumeist einer Dreschtrommel nachgeordnet.

Der eine oder die mehreren Axialrotoren sind jeweils an einem Einlaufkopf der Abscheidevorrichtung, die an ihrem frontseitigen Einlaufende angeordnet sind, an Trägern des Gehäuses gelagert, die den Querschnitt des Kanals am Einlaufende teilweise verschließen. Dadurch können gerade im Bereich des Einlaufkopfes solcher Mähdrescher Gutstaus auftreten.

Der Mähdrescher der Druckschrift EP 2 774 474 A2 sieht eine sich über die Breite der Drescheinrichtung erstreckende Messleiste vor, um eine ungleichmäßige Verteilung von Erntegut zu erfassen. Die Druckschrift EP 1 470 749 A1 wird ein Auftreffpunkt der Körner auf eine Trenneinrichtung eines Mähdreschers detektiert, um den Anteil der Verlustkörner zu minimieren.

Um einen Gutstau zu vermeiden, ist der Zuführtrommel zumeist ein Einlaufsegment zugeordnet. Das Einlaufsegment weist einen gegenüber der Zuführtrommel größeren Durchmesser auf und umgibt die Zuführtrommel zumindest teilweise. Es bildet einen Einlaufbereich in die Abscheidevorrichtung.

Bei einer Abscheidevorrichtung mit mehreren Axialrotoren sind am Einlaufsegment zumeist Leitelemente angeordnet, um feststehende Gehäuseteile zu umgehen, die Auftrennung des Erntegutstroms in Teilströme zu verbessern und insgesamt die Zuführung des Erntegutes in die Abscheidevorrichtung zu erleichtern.

Aufgabe der vorliegenden Erfindung ist es, einen solchen Mähdrescher weiter zu verbessern, so dass der Gutfluss, insbesondere am frontseitigen Einlaufende der Abscheidevorrichtung, verbessert und ein Gutstau vermieden wird.

Die Aufgabe wird gelöst mit einem selbstfahrenden Mähdrescher mit den Merkmalen des unabhängigen Patentanspruchs 1 und einem Verfahren zum Steuern eines Mähdreschers mit den Merkmalen des unabhängigen Patentanspruchs 11. Vorteilhafte Ausführungsformen sind den abhängigen Ansprüchen entnehmbar.

Dafür wird ein selbstfahrender Mähdrescher mit einer Abscheidevorrichtung, die zumindest einen Axialrotor umfasst, und mit einer Zuführtrommel, die der Abscheidevorrichtung vorgeordnet ist, geschaffen. Die Zuführtrommel ist zum Zuführen eines Erntegutstromes in die Abscheidevorrichtung vorgesehen. Der Zuführtrommel ist ein Einlaufsegment zugeordnet.

Der Mähdrescher zeichnet sich dadurch aus, dass das Einlaufsegment und/oder Teile davon austauschbar und/oder verstellbar im Mähdrescher angeordnet ist oder sind.

Durch Austauschen des Einlaufsegmentes kann der Mähdrescher an verschiedenes Erntegut, wechselnde Erntebedingungen, besondere Ernteumstände und/oder Verschleiß des Einlaufsegmentes oder seiner Teile angepasst werden. Ein Verstellen des Einlaufsegmentes oder seiner Teile ermöglicht bei einer Vergrößerung eines Spaltes zwischen der Zuführtrommel und dem Einlaufsegment eine Verbesserung der Gutförderung und dadurch des Gutflusses in die Abscheidevorrichtung. Dadurch können Gutstaus, insbesondere am frontseitigen Einlaufende der Abscheidevorrichtung, vermieden werden.

Ein zu kleiner Spalt kann zudem zu einer stärkeren Belastung des Erntegutes und schlechter Strohqualität führen, und erfordert eine höhere Antriebsleistung.

In einer bevorzugten Ausführungsform umfasst der Mähdrescher einen Sensor, mit dem der Erntegutdurchlass messbar ist, und der am Einlaufsegment angeordnet ist. Der Sensor erfasst bevorzugt eine Kraft des auf das Einlaufsegment wirkenden Erntegutstroms, beispielsweise mit Hilfe eines Drucksensors oder eines Dehnmessstreifens. In einer weiteren bevorzugten Ausführungsform erfasst der Sensor dafür ein Drehmoment der Zuführtrommel, das als Maß für den Erntegutdurchlass dient.

Mit dem Sensor ist eine Änderung des Erntegutdurchlasses erfassbar. Eine Erhöhung sowie eine Verringerung des Erntegutdurchlasses kann dem Bediener angezeigt werden, so dass dieser das Einlaufsegment gegebenenfalls austauschen oder verstellen kann. Ein Verstellen des Einlaufsegmentes kann auch automatisch erfolgen, wenn das Einlaufsegment über einen automatisch verstellbaren Verstellmechanismus verfügt. Zudem sind neben dem Einlaufsegment auch weitere Antriebs-, Förderungs- und/oder Verarbeitungsaggregate des Mähdreschers, insbesondere durch Einstellen ihrer Parameter, anhand des gemessenen Durchlasses steuerbar. Dadurch ist der Gutfluss in Abhängigkeit vom Erntegutdurchlass anpassbar. Der Mähdrescher kann dann so gesteuert werden, dass der Gutfluss verbessert und ein Gutstau, insbesondere im Bereich des Einlaufkopfes der Abscheidevorrichtung, vermieden wird.

Das Einlaufsegment ist unterhalb der Zuführtrommel und vor der Abscheidevorrichtung angeordnet. Es kann an dem Einlaufkopf der Abscheidevorrichtung befestigt sein.

Erfindungsgemäß sind das Einlaufsegment und/oder seine Teile in Abhängigkeit vom Erntegutdurchlass, dem Erntegut, den Erntebedingungen und/oder seinem Verschleiß austauschbar im Mähdrescher angeordnet. Dabei können das Einlaufsegment oder seine Teile bei Verschleiß durch ein baugleiches Einlaufsegment oder baugleiche Teile ausgetauscht werden. In Abhängigkeit vom Erntegutdurchlass, dem Erntegut und/oder den Erntebedingungen ist es aber auch bevorzugt, das Einlaufsegment oder seine Teile durch ein anderes Einlaufsegment und/oder andere Teile zu ersetzen.

Erfindungsgemäß sind das Einlaufsegment und/oder seine Teile in Abhängigkeit vom Erntegutdurchlass, dem Erntegut, den Erntebedingungen und/oder seinem Verschleiß verstellbar im Mähdrescher angeordnet.

Zum Verstellen des Einlaufsegmentes und/oder seiner Teile umfasst der Mähdrescher bevorzugt eine erste Verstellmechanik. Dabei ist es sowohl bevorzugt, dass die erste Verstellmechanik zum manuellen Verstellen des Einlaufsegmentes und/oder seiner Teile ausgebildet ist, als auch, dass sie zum automatischen Verstellen des Einlaufsegmentes und/oder seiner Teile ausgebildet ist. Durch das Verstellen des Einlaufsegmentes und/oder seiner Teile wird ein Abstand des Einlaufsegmentes und/oder seiner Teile zur Zuführtrommel verringert oder vergrößert. Bei einem sich verringernden Erntegutdurchlass, insbesondere einer sich verringernden Dicke der Erntegutmatte, kann die Gutförderung durch einen sich verringernden Abstand des Einlaufsegmentes und/oder seiner Teile von der Zuführtrommel verbessert werden. Andererseits kann einem Erntegutstau bei steigendem Erntegutdurchlass, insbesondere einer dicker werdenden Erntegutmatte, durch ein Vergrößern des Erntegutstaus entgegen gewirkt werden.

Die austauschbaren und/oder verstellbaren Teile des Einlaufsegmentes sind vorzugsweise ein oder mehrere, insbesondere schräge oder v-förmige, Leitelemente, Rampen und/oder Messer. Ein Austauschen oder Verstellen von solchen Teilen, beispielsweise ein Austauschen einer Rampe gegen ein v- förmiges Leitelement oder ein Anheben eines Messers, kann zudem zu einer besseren Gutteilung führen.

Um das Einlaufsegment und/oder seine Teile in Abhängigkeit vom Erntegutdurchlass, dem Erntegut, den Erntebedingungen und/oder seinem Verschleiß zu verstellen, umfasst der Mähdrescher bevorzugt eine Gerätesteuerung. Die Gerätesteuerung ist zum automatischen Steuern von Antriebs-, Förderungs- und/oder Verarbeitungsaggregaten und/oder ihrer Parameter des Mähdreschers vorgesehen, beispielsweise zum automatischen Steuern von Drehzahlen, Abständen und/oder Schwellwerten. Bevorzugt ist die Gerätesteuerung auch zum automatischen Verstellen der ersten Verstellmechanik ausgebildet.

In einer bevorzugten Ausführungsform weist der Mähdrescher zudem eine zweite Verstellmechanik zum Verstellen eines Dreschkorbs des Dreschwerks auf. Es ist bevorzugt, dass die erste Verstellmechanik zumindest teilweise Bauteile der zweiten Verstellmechanik, die zum Verstellen eines Dreschkorbs vorgesehen ist, nutzt. Vorzugsweise werden die erste und die zweite Verstellmechanik gemeinsam verstellt. Die erste Verstellmechanik kann aber auch unabhängig von der zweiten Verstellmechanik verstellbar und/oder angeordnet vorgesehen sein. Zudem kann der Mähdrescher weitere Verstellmechaniken zum Verstellen von Teilen des Einlaufsegmentes unabhängig voneinander aufweisen.

Es ist weiterhin bevorzugt, dass die erste Verstellmechanik einen Überlastschutz umfasst, der bei einer Überlast des Erntegutes nachgibt. Dadurch vergrößert sich ein Spalt zwischen der Zuführtrommel und dem Einlaufsegment. Vorzugsweise nutzt der Überlastschutz eine Feder oder einen Hydraulikspeicher dafür.

Die Aufgabe wird weiterhin gelöst mit einem Verfahren zum Steuern eines selbstfahrenden solchen Mähdreschers, bei dem ein Erntegutdurchlass mittels eines am Einlaufsegment angeordneten Durchlasssensors gemessen wird, wobei ein Abstand des Einlaufsegmentes und/oder seiner Teile von der Zuführtrommel in Abhängigkeit vom erfassten Erntegutdurchlass gesteuert werden. Zudem können auch weitere Antriebs-, Förderungs- und/oder Verarbeitungsaggregate des Mähdreschers in Abhängigkeit von dem mit dem Durchlasssensor gemessenen Erntegutdurchlass gesteuert werden. Der gemessene Erntegutdurchlass und/oder der Abstand des Einlaufsegmentes und/oder seiner Teile von der Zuführtrommel können dem Bediener an einer Benutzerschnittstelle angezeigt werden. Durch eine solche Steuerung ist eine sehr schnelle Anpassung des Abstandes möglich. Dadurch können auf eine Verringerung oder eine Erhöhung des Erntegutdurchlasses schnell reagiert, der Gutfluss sichergestellt und Erntegutstaus vermieden werden.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1: einen Ausschnitt aus einem erfindungsgemäßen selbstfahrenden Mähdrescher mit einer Abscheidevorrichtung, die einen Axialrotor aufweist;
- Fig. 2: in (a) - (c) schematisch verschiedene Ausführungsformen eines Dreschwerks mit nachgeordneter Abscheidevorrichtung für den Mähdrescher der Fig. 1;
- Fig. 3: in (a) - (e) verschiedene Ausführungsformen von Einlaufsegmenten für den Mähdrescher aus Fig. 1;
- Fig. 4: in (a) die Anordnung einer Ausführungsform des Einlaufsegmentes in einer Förderrichtung vor der Abscheidevorrichtung des Mähdreschers aus Fig. 2, und in (b) die Anordnung einer weiteren Ausführungsform des Einlaufsegmentes unterhalb einer Zuführtrommel des Mähdreschers aus Fig. 1; und
- Fig. 5: in (a) einen Ausschnitt aus einem Trommelhaus für das Dreschwerk mit im Trommelaus angeordnetem Einlaufsegment und am Trommelhaus angeordneter Abscheidevorrichtung, und in (b) den Ausschnitt aus (a) mit teilweise aus dem Trommelhaus heraus gezogenem Einlaufsegment des Mähdreschers aus Fig. 1.

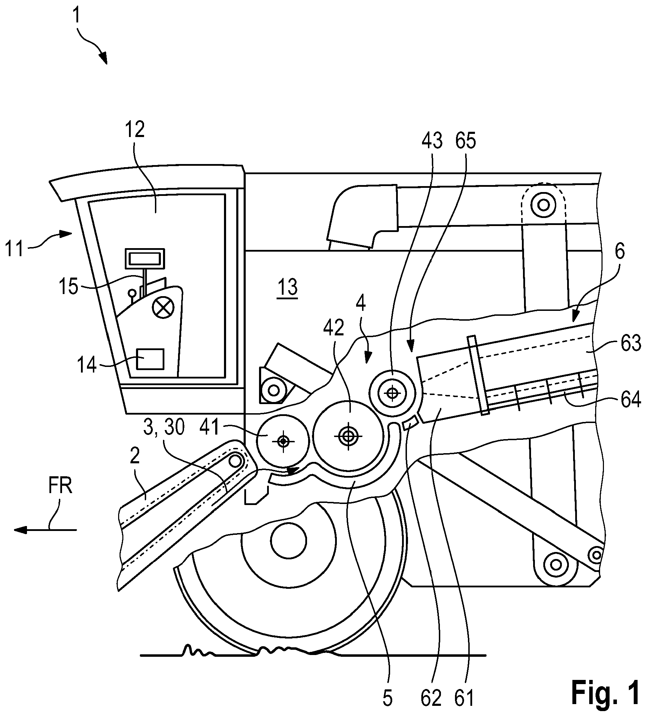

Figur 1 zeigt einen Ausschnitt aus einem erfindungsgemäßen selbstfahrenden Mähdrescher 1, der eine Abscheidevorrichtung 6 mit einem Axialrotor 63 aufweist. Eine Fahrtrichtung des Mähdreschers 1 ist durch einen Pfeil FR gezeigt. Die Abscheidevorrichtung und der Axialrotor sind in Fahrtrichtung FR ausgerichtet.

Der Mähdrescher 1 weist eine Frontseite 11 auf, an der eine Fahrerkabine 12 für einen Bediener (nicht gezeigt) angeordnet ist. An der Frontseite 11 ist zudem ein Schneidwerk (nicht gezeigt) angeordnet, welches Erntegut (nicht gezeigt) aufnimmt. Das Schneidwerk leitet das Erntegut in einen unterhalb der Fahrerkabine 12 angeordneten Einzugkanal 2, über den das Erntegut als Erntegutstrom 3 in eine Förderrichtung 30 in ein Dreschwerk 4 des Mähdreschers 1 geleitet wird.

Das Dreschwerk 4 weist drei Trommeln 41, 42, 43 auf, nämlich eine Beschleunigungstrommel 41, die einer Dreschtrommel 42 vorgeordnet ist, die Dreschtrommel 42 sowie eine der Dreschtrommel 42 nachgeordnete Zuführtrommel 43. Die Beschleunigungstrommel 41 ist zum Beschleunigen und zum Vordreschen des Erntegutes sowie zum Zuführen des Erntegutes zur Dreschtrommel 42 vorgesehen. Die Dreschtrommel 42 drischt das Erntegut. Die Trommeln 41 - 43 des Dreschwerks sind quer zur Fahrtrichtung FR angeordnet.

Unterhalb der Beschleunigungstrommel 41 und der Dreschtrommel 42 ist ein Dreschkorb 5 angeordnet. Durch den Dreschkorb 5 wird gelöstes Korn (nicht gezeigt) aus dem Erntegutstrom 3 abgeschieden.

Die Zuführtrommel 43 übergibt das Erntegut einer nachgeordneten Abscheidevorrichtung 6, die einen Axialrotor 63 umfasst. Dafür ist unterhalb der Zuführtrommel 43 ein Einlaufsegment 62 angeordnet. Das Einlaufsegment 62 weist einen gegenüber der Zuführtrommel 43 größeren Durchmesser (nicht bezeichnet) auf und umgibt die Zuführtrommel 43 zumindest teilweise. Es bildet einen Einlaufbereich in die Abscheidevorrichtung 6. Der Mähdrescher 1 ist hier daher als Hybridmaschine ausgebildet. Die Erfindung betrifft aber auch Axialrotormaschinen, die kein separates Dreschwerk 4 aufweisen, sondern bei denen der Axialrotor 63 auch zum Dreschen des Erntegutes ausgebildet ist.

Erfindungsgemäß ist das Einlaufsegment 62 austauschbar und/oder verstellbar, um den Gutfluss, insbesondere in Abhängigkeit vom Erntegutdurchlass, dem Erntegut, den Erntebedingungen und/oder dem Verschleiß, zu verbessern. Über das Einlaufsegment 62 wird der Erntegutstrom 3 einem Einlaufkopf 61 der Abscheidevorrichtung 6 zugeführt. Der Axialrotor 63 ist, insbesondere an einem frontseitigen Einlaufende, am Einlaufkopf 61 gelagert. Die Abscheidevorrichtung 6 ist zum weiteren Abscheiden von Körnern aus dem Erntegutstrom 3 vorgesehen.

Die im Dreschwerk 4 und der Abscheidevorrichtung 6 abgeschiedenen Körner werden weiteren nachgeordneten Förderungs- und/oder Verarbeitungsaggregaten (nicht bezeichnet oder nicht gezeigt) zugeführt, die die Körner von weiteren Nichtkornbestandteilen reinigen und sie anschließend in einen Korntank 13 leiten. Stroh und Spreu (nicht bezeichnet) werden an einer der Frontseite 11 gegenüber liegenden Heckseite (nicht bezeichnet) des Mähdreschers 1 auf dem Boden (nicht bezeichnet) abgelegt oder verteilt.

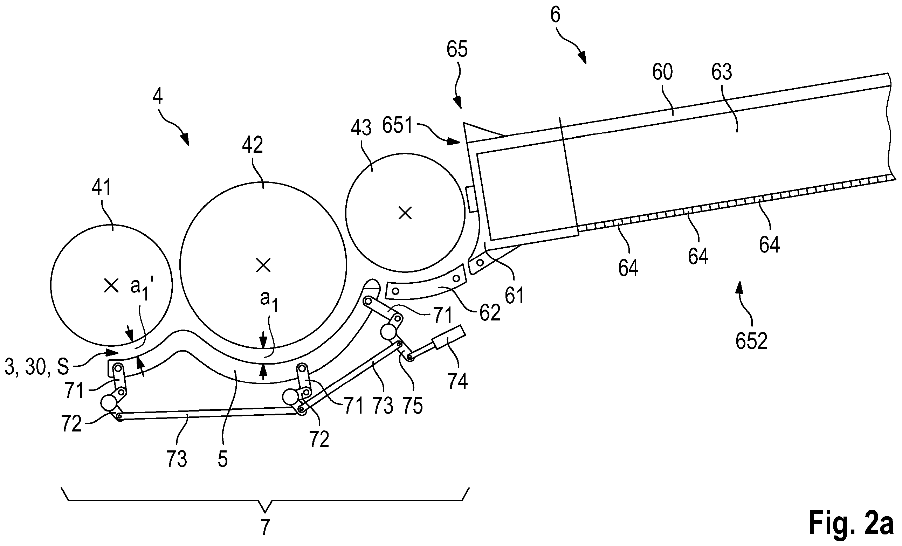

Fig. 2 (a) zeigt eine Anordnung aus dem Dreschwerk 4 des Mähdreschers 1 der Fig. 1 und der Abscheidevorrichtung 6 in einer Seitenansicht schematisch. Von der Abscheidevorrichtung 6 ist nur ein Ausschnitt dargestellt. Das Dreschwerk 4 umfasst die drei Trommeln 41 - 43 und den Korbboden 5. In der Abscheidevorrichtung 6 ist der Axialrotor 63 angeordnet.

Bei der Bearbeitung des Erntegutes wird dieses als Erntegutstrom 3 in Förderrichtung 30 durch einen Spalt S zwischen den Trommeln 41 - 43 und dem Dreschkorb 5 gefördert und dabei ausgedroschen. Die Trommeln 41 - 43 drehen sich dabei jeweils in eine Drehrichtung (nicht bezeichnet) um ihre Drehachsen (nicht bezeichnet). Die Zuführtrommel 63 führt den gedroschenen Erntegutstrom 3 der Abscheidevorrichtung 6 zu. Die Abscheidevorrichtung 6 ist dem Dreschwerk 4 nachgeordnet.

Die Abscheidevorrichtung 6 umfasst ein Gehäuse 60, in dessen Innenraum (nicht bezeichnet) der Axialrotor 63 angeordnet ist. An einer Frontseite 651 des Gehäuses 60 weist dieses den Einlaufkopf 61 auf. Der Axialrotor 63 ist quer zu den Trommeln 41 - 43 des Dreschwerks 4 angeordnet. Bei der Bearbeitung des Erntegutes wird er in eine Drehrichtung (nicht bezeichnet) um seine Drehachse (nicht bezeichnet) gedreht. Dabei wird das Erntegut spiralförmig um den Axialrotor 63 gefördert. An einer Unterseite 652 des Gehäuses 60 sind Abscheidekörbe 64 vorgesehen, durch die die dabei gelösten Körner vom Erntegutstrom 3 abgeschieden werden.

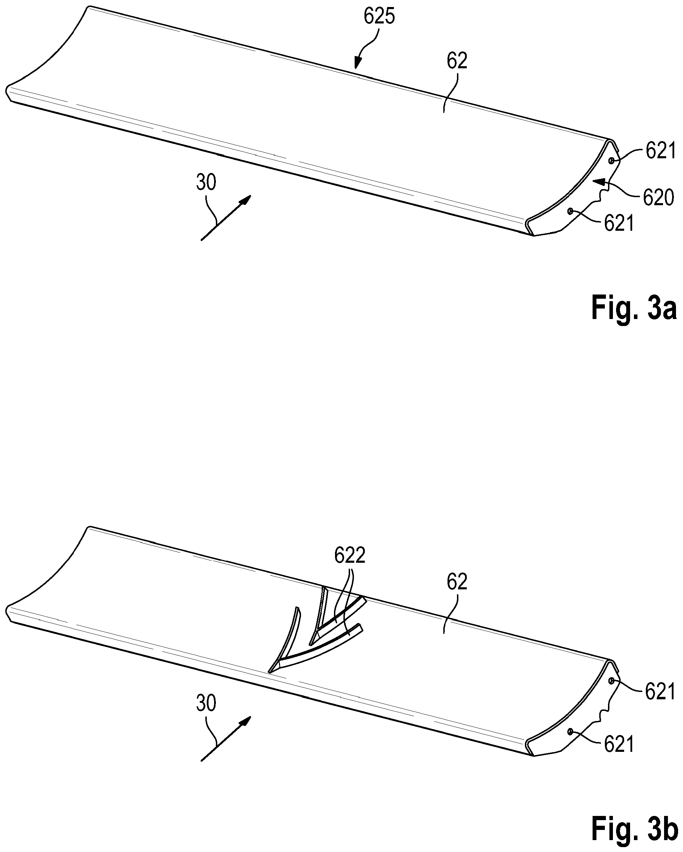

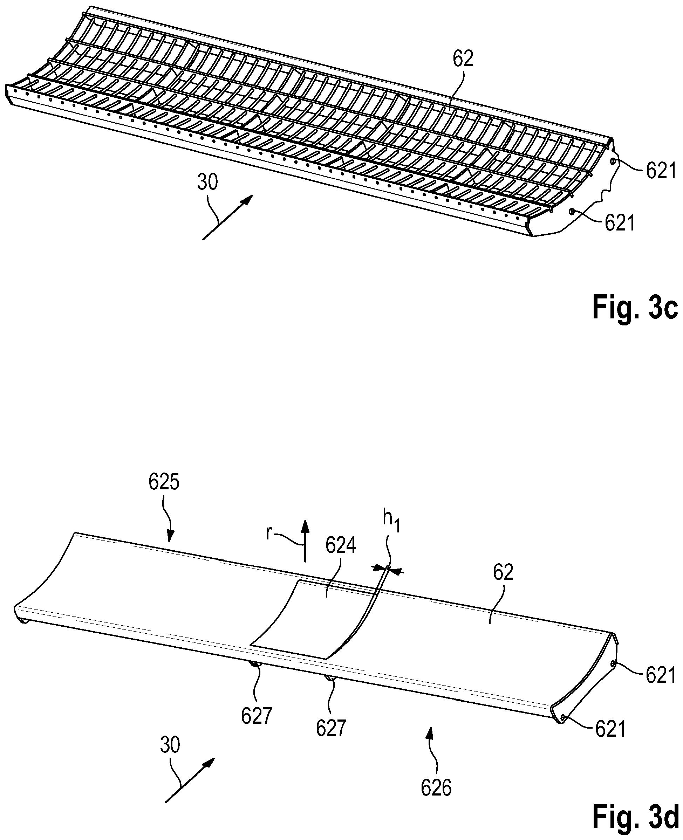

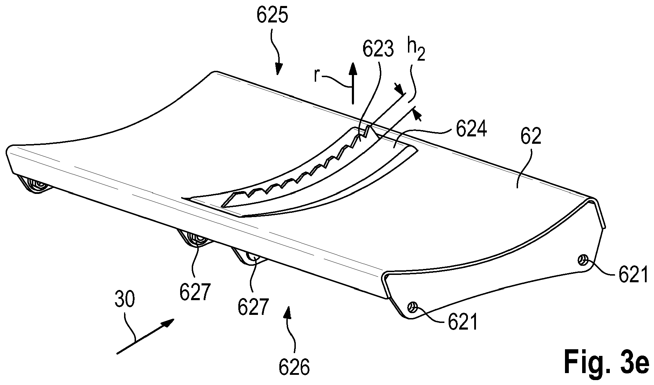

Das Einlaufsegment 62 ist unterhalb der Zuführtrommel 43 angeordnet. Zudem ist es vor dem Einlaufkopf 61 angeordnet. Über das Einlaufsegment 62 wird der Erntegutstrom 3 in den Einlaufkopf 61 und den Innenraum der Abscheidevorrichtung 6 geleitet. Um den Gutfluss zu verbessern, können am Einlaufsegment 62 ein oder mehrere Leitelemente 622 (s. Fig. 3b), Rampen 624 (s. Fig. 3d) und/oder Messer 623 (s. Fig. 3e) angeordnet sein.

Bei der Ausführungsform der Fig. 2 (a) weist der Mähdrescher 1 eine zweite Verstellmechanik 7 auf, mit der der Dreschkorb 5 verstellbar ist. Am Dreschkorb 5 sind dafür Laschen 71 voneinander beabstandet befestigt, die jeweils mit einem ortsfest drehgelagerten Winkelhebel 72 verbunden sind. Die Winkelhebel 72 sind mittels Verbindungsstreben 73 miteinander verbunden. Ein Verbindungswinkelhebel 75 ist mittels eines Verstellhebels 74, der hier beispielhaft als Hydraulikzylinder ausgebildet ist, verstellbar. Um den Ausdrusch erntegutabhängig und/oder in Abhängigkeit von den Erntebedingungen zu beeinflussen, kann der Dreschkorb 5 durch Verstellen des Verstellhebels 74 verstellt werden. Dabei wird ein Abstand a1 zwischen dem Dreschkorb 5 und der Dreschtrommel 42 und ein Abstand a1' zwischen dem Dreschkorb 5 und der Beschleunigungstrommel 41 verringert oder vergrößert.

Das Einlaufsegment 62 dieser Ausführungsform des Mähdreschers 1 ist, beispielsweise bei Verschleiß, durch ein baugleiches Einlaufsegment 62 ersetzbar. Zudem kann es, beispielsweise in Abhängigkeit vom bearbeiteten Erntegut, von den Erntebedingungen und/oder vom Erntegutdurchfluss, durch ein anderes Einlaufsegment 62 ausgetauscht werden.

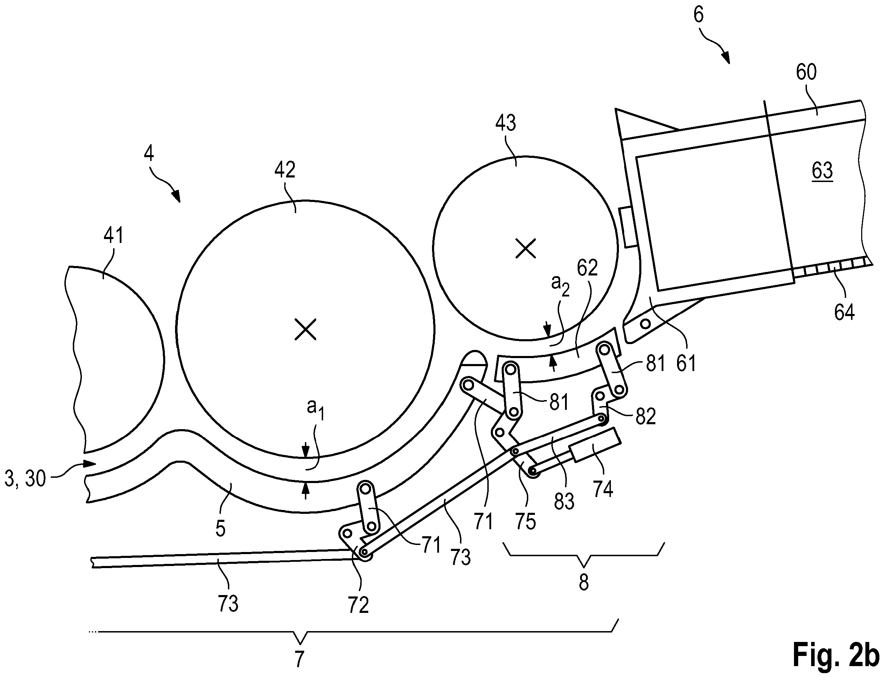

Es kann zusätzlich oder alternativ verstellbar vorgesehen sein. Einen Mähdrescher 1 mit einem solchen Einlaufsegment 62 zeigt die Fig. 2 (b).

Bei dieser Ausführungsform des Mähdreschers 1 weist dieser zudem eine erste Verstellmechanik 8 zum Verstellen des Einlaufsegmentes 62 auf. Diese umfasst zwei Laschen 81, die voneinander beabstandet am Einlaufsegment 62 befestigt sind. In Abhängigkeit von der Verstellaufgabe ist aber auch eine Verstellmechanik 7 mit nur einer einzigen oder mit mehr als zwei Laschen 81 bevorzugt. Die Laschen sind jeweils mit einem ortsfest drehgelagerten Winkelhebel 82 verbunden. Einer der Winkelhebel 82 ist mittels einer Verbindungsstrebe 83, der andere Winkelhebel 82 ist unmittelbar mit dem Verbindungswinkelhebel 75 der zweiten Verstellmechanik 7 verbunden. Dadurch sind auch die Laschen 81 der ersten Verstellmechanik 8 mittels des Verstellhebels 74 der zweiten Verstellmechanik 7 verstellbar. Die zweite Verstellmechanik 7 wird hier daher auch zum Verstellen der ersten Verstellmechanik 8 genutzt. Es ist aber ebenfalls bevorzugt, zum Verstellen der ersten Verstellmechanik 8 einen separaten Verstellhebel (nicht gezeigt) vorzusehen.

Zusätzlich oder alternativ können ein oder mehrere weitere Verstellmechaniken (nicht gezeigt) vorgesehen sein, mit denen Teile 622 - 624 des Einlaufsegmentes 62 gemeinsam oder unabhängig voneinander verstellbar sind. Solche Teile 622 - 624 werden im Rahmen der Fig. 3 näher erläutert. Auch zum Verstellen der Teile 622 - 624 des Einlaufsegmentes 62 kann es vorgesehen sein, dass Bauteile der ersten und/oder zweiten Verstellmechanik 7, 8 genutzt werden.

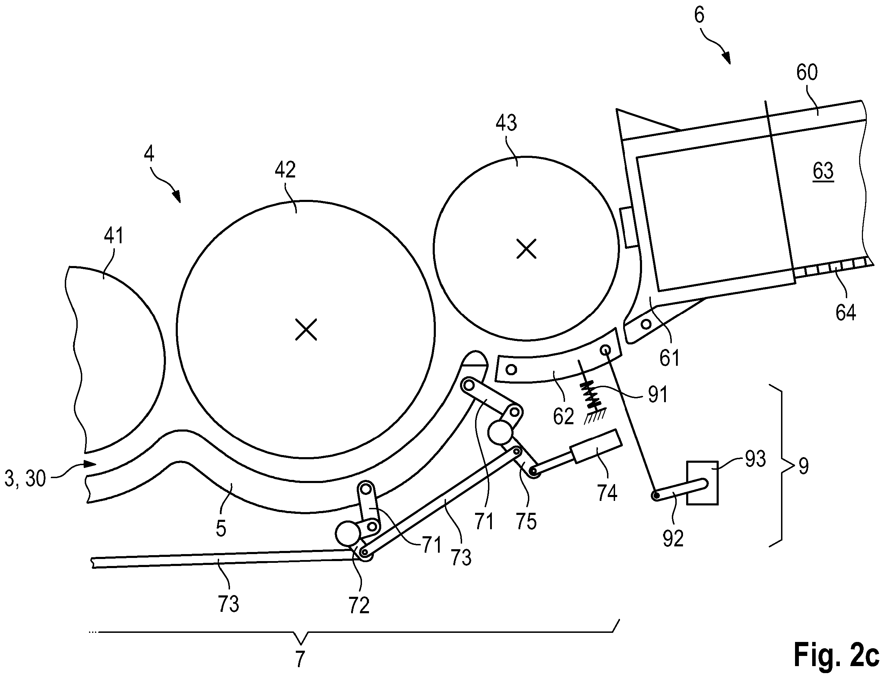

Die Fig. 2 (c) zeigt den Mähdrescher 1 der Fig. 2 (a), wobei am Einlaufsegment 62 zudem ein Sensor 9, im Folgenden auch Durchlasssensor 9 genannt, angeordnet ist. Mit dem Durchlasssensor 9 wird eine Kraft des das Einlaufsegment 62 passierenden Erntegutstroms 3 gemessen, die auf das Einlaufsegment 62 wirkt.

Der Durchlasssensor 9 umfasst einen Drehhebel 92, der mit einem elektrischen Potentiometer 93 verbunden ist. Durch Drehen des Drehhebels 92 wird ein elektrischer Widerstand des Potentiometers 93 geändert. Dadurch ändert sich die über dem Potentiometer 93 abfallende Spannung (nicht dargestellt). Die Spannungsänderung ist ein Maß für das Gewicht des den Mähdrescher 1 durchfließenden Erntegutstroms 3, und somit auch ein Maß für den Erntegutstrom 3.

Anhand des mit dem Durchlasssensor 9 gemessenen Durchlasses ist der Mähdrescher 1, insbesondere sind die Aggregate und/oder ihre Parameter, des Mähdreschers 1, steuerbar. Bevorzugt werden die Drehzahl der Trommeln 41 - 43 des Dreschwerks 4, die Drehzahl des Axialrotors 63 der Abscheidevorrichtung 6, der Abstand a1, a1' des Dreschkorbes 5 von der Dreschtrommel und der Beschleunigungstrommel 41, der Abstand a2 des Einlaufsegmentes 62 von der Zuführtrommel 43 und/oder Parameter der weiteren Aggregate des Mähdreschers 1 in Abhängigkeit von dem gemessenen Erntegutdurchlass gesteuert. Dafür weist der Mähdrescher 1 eine Gerätesteuerung 14 auf. Der Erntegutdurchlass, der Abstand a1, a1', a2 der Trommeln 41, 42, 43 vom Dreschkorb 5 und/oder dem Einlaufsegment 62 und/oder die Parameter der Aggregate sind an einer Benutzerschnittstelle 15 anzeigbar.

Am Einlaufsegment 62 ist hier zudem ein Überlastschutz 91 vorgesehen. Der Überlastschutz 91 ist hier schematisch als am Einlaufsegment 62 angeordnete Feder 91 dargestellt. Er kann aber auch als hydraulischer Überlastschutz 91 ausgebildet sein, der beispielsweise einen Hydraulikspeicher (nicht gezeigt) nutzt.

Der Überlastschutz 91 bewirkt, dass das Einlaufsegment 62 bei einer durch das Erntegut verursachten Überlast kurzzeitig nachgibt. Dabei wird der Spalt S zwischen dem Einlaufsegment 62 und der Zuführtrommel 43 vergrößert. Dabei gibt die Feder 91 oder der Hydraulikspeicher (nicht gezeigt) bei Überlast nach.

Sofern ein gemeinsames Verstellen des Dreschkorbs 5 und des Einlaufsegment 62 mithilfe einer gemeinsam genutzten Verstellmechanik 7, 8 vorgesehen ist, wird das Einlaufsegment 62 bei einem durch den Überlastschutz 91 bewirkten Ausweichen des Dreschkorbs 5 automatisch mit verstellt. Sofern hingegen die erste und die zweite Verstellmechanik 8, 7 unabhängig voneinander verstellbar sind, weisen vorzugsweise sowohl der Dreschkorb 64 als auch das Einlaufsegment 62 jeweils einen eigenen solchen Überlastschutz 91 auf. Fig. 3 zeigt in (a) - (d) verschiedene Ausführungsformen von Einlaufsegmenten 62, die sich für verschiedenes Erntegut und/oder verschiedene Erntebedingungen eignen.

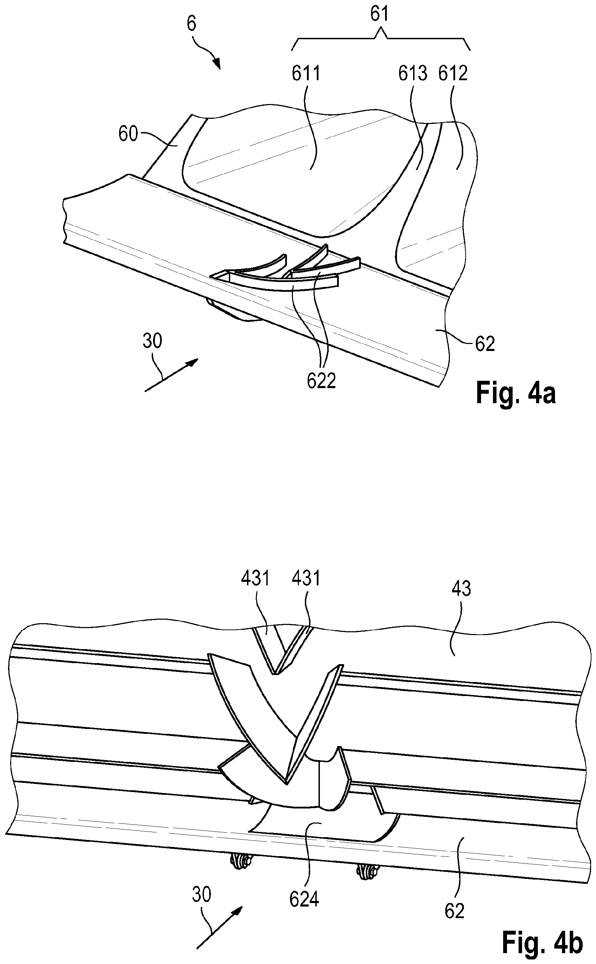

Das Einlaufsegment 62 der Fig. 3 (a) ist glatt ausgebildet. Es weist keine Leitelemente 622 (s. Fig. 3 (b)), Rampen 624 (s. Fig. 3 (d)) oder Messer 623 (s. Fig. 3 (e)) auf. An Schmalseiten 620 des Einlaufsegments 62 sind Bohrungen 621 zum Befestigen von Bolzen oder Schrauben 471 (s. Fig. 4 (a)) angeordnet, mit denen das Einlaufsegment 62 in einem Gehäuse 44 (s. Fig. 4) des Mähdreschers 1 befestigbar ist. Die Schrauben 471 sind für einen Bediener (nicht gezeigt) des Mähdreschers 1 zugänglich angeordnet, so dass sie für einen Austausch des Einlaufsegmentes 62 lösbar sind. Die Bolzen oder Schrauben 471 können auch zum Befestigen der ersten Verstellmechanik 8, insbesondere der Laschen 81 der ersten Verstellmechanik 8, genutzt werden.

Ein solches glattes Einlaufsegment 62 eignet sich vor allem für eine Abscheidevorrichtung 6 mit einem einzigen Axialrotor 63. Es ist ein Standard- Einlaufsegment 62, das sich bei günstigen Erntebedingungen für alle Körner oder Früchte eignet.

Das Einlaufsegment 62 der Fig. 3 (b) weist mittig zwei in Förderrichtung 30 hintereinander angeordnete Leitelemente 622 auf. Die Leitelemente 622 sind v- förmig ausgebildet, so dass sie einen in die Förderrichtung 30 über das Einlaufsegment 62 geführten Erntegutstrom 3 teilen.

Ein solches Einlaufsegment 62 mit mittig angeordneten, v- förmigen Leitelementen 622 eignet sich vor allem für eine Abscheidevorrichtung 6 mit zwei quer zur Förderrichtung 30 nebeneinander angeordneten Axialrotoren 63. Eine solche Abscheidevorrichtung 6 zeigt Fig. 4 (a). Dargestellt sind dort ein Ausschnitt aus der Abscheidevorrichtung 6 und das vor der Abscheidevorrichtung 6 angeordnete Einlaufsegment 62 der Fig. 3 (b). Sichtbar ist eine Aufteilung des Gehäuses 60 dieser Abscheidevorrichtung 6 in zwei Abscheidekanäle 611, 612, in denen jeweils einer der Axialrotoren 63 anordbar ist.

Die v- förmigen Leitelemente 622 des Einlaufsegmentes 62 der Fig. 3 (b) sind Gegenelemente zu an der Zuführtrommel 43 angeordneten Schneckenblechen 431 (s. Fig. 4 (b)). Sie sind vor einer mittig angeordneten, feststehenden Gehäusewand 613 des Gehäuses 60 der Abscheidevorrichtung 6 angeordnet, die die Kanäle 611, 612 voneinander trennt. Durch die Leitelemente 622 wird das Erntegut besser in zwei nebeneinander geführte Erntegutteilströme (nicht gezeigt) geteilt, und kann daher besser in die Kanäle 611, 612 geleitet werden. Der Gutfluss wird dadurch verbessert.

Verwendet wird ein solches Einlaufsegment 62 bevorzugt für Raps oder grünes Erntegut oder Stängel wie beispielsweise Soja.

Anstelle von mittig angeordneten, v-förmigen Leitelementen 622 können bei einer Abscheidevorrichtung 6 mit nur einem einzigen Axialrotor 63 seitlich jeweils schräg angeordnete Leitelemente (nicht gezeigt) vorgesehen sein.

Das Einlaufsegment 62 der Fig. 3 (c) ist siebförmig ausgebildet. Dadurch können auch am Einlaufsegment 62 Körner vom Erntegutstrom 3 abgeschieden werden. Es solches Einlaufsegment 62 eignet sich daher zum Abscheiden von Körnern oder Früchten wie beispielsweise Getreide oder Reis. Es wird daher vor allem in Hybridmaschinen als zusätzliche Abscheidefläche genutzt. Die dargestellte Ausführungsform eignet sich vor allem für Getreide. Eine Ausführungsform mit einem weniger engmaschigen Drahtnetz (nicht gezeigt) wird für Reis genutzt.

Um den Gutfluss zu beeinflussen, weist das Einlaufsegment 62 der Fig. 3 (d) eine Rampe 624 auf. Die Rampe 624 ist in und gegen eine Verstellrichtung r höhenverstellbar vorgesehen. Dabei wird eine Höhe h1 der Rampe 624 gegenüber der Oberseite 625 des Einlaufsegmentes 62 verstellt. Dafür sind an einer Unterseite 626 des Einlaufsegmentes 62 Verstellmittel 627 angeordnet, an denen eine Verstellmechanik (nicht gezeigt) anbringbar ist. Auch bei diesem Einlaufsegment 62 kann der Erntegutstrom 3 daher vor dem Einführen in die Abscheidevorrichtung 6 in zwei nebeneinander geführte Erntegutteilströme geteilt werden. Analog zu Ausführungsform der Fig. 3 (b) wirkt hier die Rampe 624 mit den Schneckenblechen der Zuführtrommel (s. Fig. 4 (b)) zusammen. Die Höhe h1 der Rampe 624 wird erntegutabhängig und/oder in Abhängigkeit von den Erntebedingungen eingestellt. Dabei wird ein Einlaufsegment 62 mit mittiger Positionierung der Rampe 624 für eine Abscheidevorrichtung 6 mit zwei nebeneinander angeordneten Axialrotoren 63 genutzt. Bei einer Abscheidevorrichtung 6 mit nur einem Axialrotor 63 können solche Rampen 624 seitlich angeordnet sein.

Fig. 4 (b) zeigt das Einlaufsegment 62 der Fig. 3 (d) unterhalb der Zuführtrommel 43. Die Zuführtrommel 43 ist hier als Trenntrommel ausgebildet. Dafür weist sie insbesondere mittig angeordnete, v- förmig ausgebildete Schneckenbleche 431 auf. Sichtbar ist, dass die Rampe 624 unterhalb der Schneckenbleche 431 der Zuführtrommel 43 angeordnet ist. Durch ein Erhöhen der Rampe 624 gegenüber der Oberfläche 625 des Einlaufsegmentes 62 und/oder ein Erhöhen des Einlaufsegmentes 62 kann die Gutförderung, insbesondere im Bereich der Schneckenbleche 431, verbessert werden. Der Erntegutstrom wird dann mit der Zuführtrommel 43 besser gefördert und der Erntegutstrom 3 besser in Teilströme geteilt.

Das Einlaufsegment 621 der Fig. 3 (e) weist mittig ein Messer 623 auf. Zudem weist es eine höhenverstellbare Rampe 624 auf. Durch Anheben der Rampe 624 in die Verstellrichtung r wird wie bei der Rampe 624 des Einlaufsegmentes 62 der Fig. 3 (d) ihre Höhe h1 gegenüber der Oberseite 625 des Einlaufsegmentes 62 verändert. Das Einlaufsegment 62 eignet sich dann zum Aufteilen des Erntegutstroms 3 in zwei Erntegutteilströme, insbesondere für Erntegut mit kurzen oder wenig zum Verhaken neigenden Halmen (nicht gezeigt), beispielsweise trockenem Weizen. Gleichzeitig wird die Höhe h2 des Messers 623 gegenüber der Rampe 624 verringert. Das Messer 623 ragt dann weniger stark in den Erntegutstrom 3 hinein.

Ist hingegen die Rampe 624 abgesenkt, ragt das Messer 623 stark in den Erntegutstrom 3 hinein. Es kann dann längere und dickere Halme zerschneiden. Daher eignet es sich besonders zum Ernten von Erntegut mit langen oder stark zum Verhaken neigenden Halmen, beispielsweise Raps, da die langen Halme von Raps vor dem Einführen des Erntegutes mit dem Messer 623 geschnitten werden können. Die Gutzufuhr des Rapses in die Abscheidevorrichtung 6 wird dadurch verbessert und die Gefahr eines Erntegutstaus verringert. Geeignet ist dieses Einlaufsegment 62 auch für Sonnenblumen oder Soja.

Auch diese Ausführungsform des Einlaufsegmentes 62 ist für Abscheidevorrichtungen 6 mit zwei nebeneinander angeordneten Axialrotoren 63 vorgesehen. Bei einer Abscheidevorrichtung 6 mit nur einem Axialrotor 63 können Rampen 624 und/oder Messer 623 seitlich angeordnet sein.

Es ist auch ein Einlaufsegment 62 bevorzugt, bei dem das Messer 623 zusätzlich oder alternativ höhenverstellbar ist. Weiterhin sind Einlaufsegmente 62 bevorzugt, die nur ein oder mehrere Messer 623 aufweisen, oder die v- förmige oder andere schräge oder bogenförmige Leitelemente 622 und/oder Messer 623 aufweisen. Weiterhin können auch v- förmige oder andere schräge oder bogenförmige Leitelemente 622 höhenverstellbar vorgesehen sein.

Weiterhin ist ein Einlaufsegment 62 bevorzugt, bei dem Leitelement 622, Messer 623 oder Rampe 624 miteinander austauschbar vorgesehen sind.

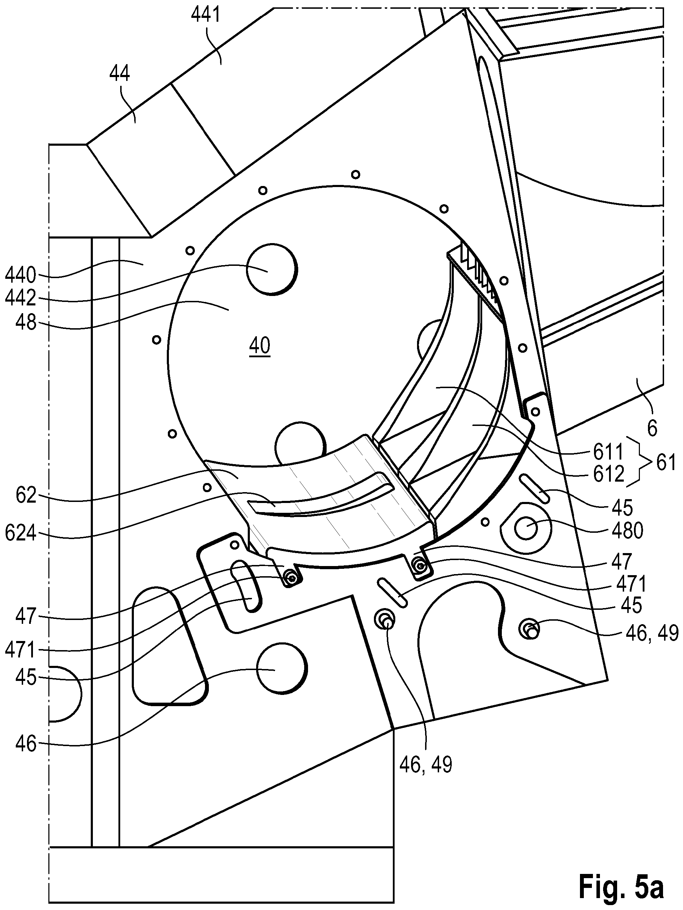

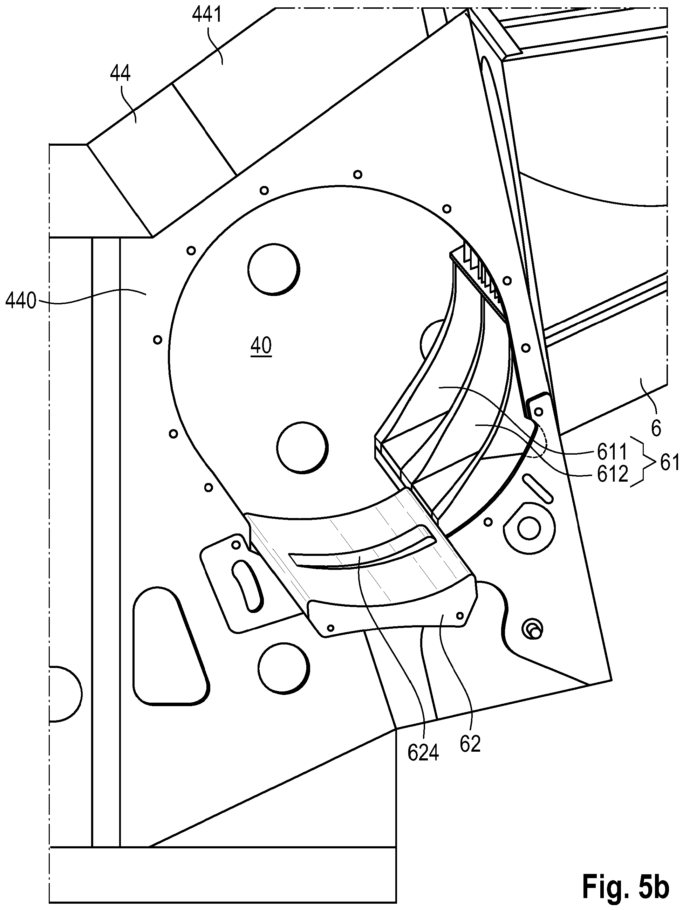

Die Fig. 5 zeigt in (a) und (b) die Anordnung des Einlaufsegmentes 62 in einem Trommelhaus 44 des Mähdreschers 1, sowie die Anordnung der Abscheidevorrichtung 6 an dem Trommelhaus 44. Die hier vorgesehene Abscheidevorrichtung 6 weist zwei Kanäle 611, 612 auf, in denen jeweils ein Axialrotor 63 angeordnet ist. Der Einlaufkopf 61 der Abscheidevorrichtung 6 ist, beispielsweise mittels Schrauben oder Bolzen 49, die durch eine Durchgangbohrung 46 einer ersten Seitenwand 440 des Trommelhauses 44 geführt sind, an dieser befestigt.

In der ersten Seitenwand 440 ist zudem eine Durchgangsöffnung 48 vorgesehen. Die Durchgangsöffnung 48 ist mit einem insbesondere zweiteiligen Deckel (nicht gezeigt) verschließbar. In einer der ersten Seitenwand 440 gegenüber liegenden zweiten Seitenwand 441 ist eine Ausnehmung 442 angeordnet, die als Lager für die Zuführtrommel 43 dient. Bei geöffnetem Deckel ist ein Innenraum 40 des Trommelhauses 44, und insbesondere sind der Einlaufkopf 61 sowie das Einlaufsegment 62, für einen Bediener von außen zugänglich.

An der ersten Seitenwand 440 sind die erste und zweite Verstellmechanik 8, 7 (s. Fig. 2 (b)) und/oder weitere Verstellmechaniken zum Verstellen eines oder mehrerer Teile 622 - 624 des Einlaufsegmentes 62 anordbar. Dafür sind an der ersten Seitenwand 440 Aussparungen 45 und Bolzen 49 angeordnet. Die Bolzen 49 sind in Durchgangsbohrungen 46, die in der ersten Seitenwand 440 vorgesehen sind, befestigt.

Unterhalb der Durchgangsöffnung 48 sind Einbuchtungen 47 vorgesehen, durch die Schrauben 471, mit denen das Einlaufsegment 62 im Trommelhaus 44 befestigt ist, zugänglich sind. Nach Lösen der Schrauben 471 kann das Einlaufsegment 62 entnommen werden. Dafür muss zuvor der Deckel oder einer der Deckelteile gelöst und entfernt werden. Sofern eine erste Verstellmechanik 8 für das Einlaufsegment 62 und/oder Teile 622, 624 davon vorgesehen ist, muss auch diese vom Einlaufsegment 62 gelöst werden. Das Einlaufsegment 62 ist dann dem Innenraum 40 entnehmbar, beispielsweise hier durch Anheben und Herausschieben. Dies zeigt Fig. 4 (b).

Das Einlaufsegment 62 ist daher austauschbar, insbesondere durch dasselbe Einlaufsegment 62, beispielsweise bei Verschleiß, oder durch verschiedene andere Einlaufsegmente 62, beispielsweise erntegutabhängig oder in Abhängigkeit von den Erntebedingungen.

### Bezugszeichenliste

- 1: Mähdrescher
- 11: Frontseite des Mähdreschers
- 12: Fahrerkabine
- 13: Korntank
- 2: Einzugkanal
- 3: Erntegutstrom
- 30: Förderrichtung
- 4: Dreschwerk
- 40: Innenraum
- 41: Beschleunigungstrommel
- 42: Dreschtrommel
- 43: Zuführtrommel
- 431: Schneckenblech
- 44: Trommelhaus
- 440: Erste Seitenwand
- 441: Zweite Seitenwand
- 442: Ausnehmung
- 45: Aussparung
- 46: Durchgangsbohrung
- 47: Einbuchtung
- 471: Schraube
- 48: Durchgangsöffnung
- 49: Bolzen
- 5: Dreschkorb
- 6: Abscheidevorrichtung
- 60: Gehäuse
- 61: Einlaufkopf
- 611,612: Abscheidekanal
- 613: Feststehendes Gehäusewand
- 62: Einlaufsegment
- 620: Schmalseite
- 621: Lagermittel, Durchgangsbohrung
- 622: Leitelement, V- förmiger Gutstromteiler
- 623: Messer
- 624: Leitelement, Rampe
- 625: Oberseite
- 626: Unterseite
- 627: Verstellmittel
- 63: Axialrotor
- 64: Abscheidekorb
- 65: Frontseitiges Einlaufende
- 651: Frontseite des Gehäuses
- 652: Unterseite
- 7: Erste Verstellmechanik
- 71: Lasche
- 72: Winkelhebel
- 73: Verbindungsstrebe
- 74: Antriebselement, Hydraulikzylinder
- 75: Verbindungswinkelhebel
- 8: Zweite Verstellmechanik
- 81: Lasche
- 82: Winkelhebel
- 83: Verbindungsstrebe
- 9: Durchlasssensor
- 91: Rückstellelement, Feder
- 92: Potentiometer
- FR: Fahrtrichtung
- S: Spalt
- a1: Abstand des Dreschkorbs von der Dreschtrommel
- a1': Abstand des Dreschkorbs von der Beschleunigungstrommel
- a2: Abstand des Einlaufsegmentes von der Zuführtrommel
- h1: Höhe der Rampe
- h2: Höhe des Messers
- r: Verstellrichtung

## Patentansprüche

1. Selbstfahrender Mähdrescher (1) mit einer Abscheidevorrichtung (6), die zumindest einen Axialrotor (63) und ein Gehäuse (60), in dessen Innenraum der Axialrotor (63) angeordnet ist, umfasst, wobei das Gehäuse (60) an einer Frontseite (651) einen Einlaufkopf (61) aufweist, und einer Zuführtrommel (43), die der Abscheidevorrichtung (6) vorgeordnet und zum Zuführen eines Erntegutstromes (3) in die Abscheidevorrichtung (6) vorgesehen ist, **dadurch gekennzeichnet, dass** der Zuführtrommel (43) ein Einlaufsegment (62) zugeordnet ist, über das der Erntegutstrom (3) dem Einlaufkopf (61) zugeführt wird, wobei das Einlaufsegment (62) und/oder Teile (622 - 624) davon austauschbar und/oder verstellbar im Mähdrescher (1) angeordnet ist oder sind, wobei das Einlaufsegment (62) unterhalb der Zuführtrommel (43) und vor der Abscheidevorrichtung (6) angeordnet ist und das Einlaufsegment (62) und/oder seine Teile (622 - 624) in Abhängigkeit vom Erntegut, den Erntebedingungen, seinem Verschleiß und/oder dem Erntegutdurchlass austauschbar und/oder verstellbar im Mähdrescher (1) angeordnet ist oder sind.

2. Selbstfahrender Mähdrescher (1) nach Patentanspruch 1,
**dadurch gekennzeichnet, dass**
er einen Sensor (9) umfasst, mit dem ein Erntegutdurchlass messbar ist, und der am Einlaufsegment (62) angeordnet ist.

3. Selbstfahrender Mähdrescher (1) nach einem der vorhergehenden Ansprüche, **dadurch gekennzeichnet, dass** das Einlaufsegment (62) austauschbare und/oder verstellbare Teile umfasst, die ein oder mehrere Leitelemente (622), Rampen (624) und/oder Messer (623) sind.

4. Selbstfahrender Mähdrescher (1) nach einem der vorhergehenden Ansprüche, **dadurch gekennzeichnet, dass** das Einlaufsegment (62) und/oder Teile (622 - 624) davon verstellbar im Mähdrescher (1) angeordnet ist oder sind, und dass der Mähdrescher eine erste Verstellmechanik (8) zum Verstellen des Einlaufsegmentes (62) und/oder seiner Teile (622 - 624) umfasst.

5. Selbstfahrender Mähdrescher (1) nach Anspruch 4, **dadurch gekennzeichnet, dass** die erste Verstellmechanik (8) manuell und/oder automatisch verstellbar ist.

6. Selbstfahrender Mähdrescher (1) nach einem der Ansprüche 4 - 5, **dadurch gekennzeichnet, dass** die erste Verstellmechanik (8) einen Überlastschutz (91) umfasst, der bei einer Überlast des Erntegutes nachgibt.

7. Selbstfahrender Mähdrescher (1) nach einem der Ansprüche 4 - 6, **dadurch gekennzeichnet, dass** er eine Gerätesteuerung (14) zum automatischen Steuern von Aggregaten (41, 42, 43, 63) des Mähdreschers (1) umfasst, die auch zum Verstellen der ersten Verstellmechanik (8) ausgebildet ist.

8. Selbstfahrende Mähdrescher (1) nach Anspruch 7 **dadurch gekennzeichnet, dass** die Gerätesteuerung (14) zum automatischen Steuern der Geschwindigkeit von Trommeln (41, 42, 43) eines Dreschwerks (4) und/oder des Axialrotors (63) vorgesehen ist.

9. Selbstfahrender Mähdrescher (1) nach einem der Ansprüche 2 - 8, **dadurch gekennzeichnet, dass** der Sensor (9) eine Kraft des auf das Einlaufsegment (62) wirkenden Erntegutstroms (3) erfasst.

10. Selbstfahrender Mähdrescher (1) nach Anspruch 9, wenn abhängig von einem der Ansprüche 4-8, **dadurch gekennzeichnet, dass** die erste Verstellmechanik (8) zumindest teilweise Bauteile (74, 75) einer zweiten Verstellmechanik (7) zum Verstellen eines Dreschkorbs (5) des Dreschwerks (4) nutzt.

11. Verfahren zum Steuern eines selbstfahrenden Mähdreschers (1) nach einem der vorhergehenden Ansprüche, bei dem ein Erntegutdurchlass mittels eines am Einlaufsegment (62) angeordneten Durchlasssensors (9) gemessen wird, wobei ein Abstand (a2) des Einlaufsegmentes (62) und/oder seiner Teile (622 - 624) von der Zuführtrommel 43 in Abhängigkeit vom erfassten Erntegutdurchlass gesteuert werden.

## Claims

1. A self-propelled combine harvester (1) with a separating device (6) which comprises at least one axial rotor (63) and a housing (60) in the interior of which the axial rotor (63) is disposed, wherein the housing (60) has an inflow head (61) at a front face (651), and a feed drum (43) is provided which is disposed in front of the separating device (6) and is provided for feeding a flow of harvested material (3) into the separating device (6), **characterized in that** an inflow segment (62) is associated with the feed drum (43) over which the flow of harvested material (3) is fed to the inflow head (61), wherein the inflow segment (62) and/or portions (622 - 624) thereof is or are disposed in the combine harvester (1) in an interchangeable and/or adjustable manner, wherein the inflow segment (62) is disposed beneath the feed drum (43) and in front of the separating device (6) and the inflow segment (62) and/or its portions (622 - 624) is or are interchangeably and/or adjustably disposed in the combine harvester (1) as a function of the harvested material, the harvesting conditions, its wear and/or the throughput of harvested material.

2. The self-propelled combine harvester (1) according to patent claim 1,
**characterized in that**
it comprises a sensor (9) with which a throughput of harvested material can be measured, and which is disposed on the inflow segment (62).

3. The self-propelled combine harvester (1) according to one of the preceding claims, **characterized in that** the inflow segment (62) comprises interchangeable and/or adjustable portions which are one or more guide elements (622), ramps (624) and/or cutters (623).

4. The self-propelled combine harvester (1) according to one of the preceding claims, **characterized in that** the inflow segment (62) and/or portions (622 -624) thereof is or are adjustably disposed in the combine harvester (1), and **in that** the combine harvester comprises a first adjustment mechanism (8) for adjusting the inflow segment (62) and/or its portions (622 - 624).

5. The self-propelled combine harvester (1) according to claim 4, **characterized in that** the first adjustment mechanism (8) can be adjusted manually and/or automatically.

6. The self-propelled combine harvester (1) according to claim 4 or claim 5, **characterized in that** the first adjustment mechanism (8) comprises an overload protector (91) which yields in the event of becoming overloaded with harvested material.

7. The self-propelled combine harvester (1) according to one of claims 4 to 6, **characterized in that** it comprises an implement control (14) for automatically controlling units (41, 42, 43, 63) of the combine harvester (1) which is also configured for adjusting the first adjustment mechanism (8).

8. The self-propelled combine harvester (1) according to claim 7, **characterized in that** the implement control (14) is provided for automatically controlling the speed of drums (41, 42, 43) of a threshing unit (4) and/or of the axial rotor (63).

9. The self-propelled combine harvester (1) according to one of claims 2 to 8, **characterized in that** the sensor (9) detects a force of the flow of harvested material (3) acting on the inflow segment (62).

10. The self-propelled combine harvester (1) according to claim 9, when dependent on one of claims 4 to 8, **characterized in that** at least to some extent, the first adjustment mechanism (8) uses components (74, 75) of a second adjustment mechanism (7) for adjusting a threshing concave (5) of the threshing unit (4).

11. A method for controlling a self-propelled combine harvester (1) according to one of the preceding claims, in which a throughput of harvested material is measured by means of a throughput sensor (9) disposed on the inflow segment (62), wherein a distance (a2) of the inflow segment (62) and/or its portions (622 - 624) from the feed drum (43) is controlled as a function of the detected throughput of harvested material.

## Revendications

1. Moissonneuse-batteuse automotrice (1) comprenant un dispositif de séparation (6) qui inclut au moins un rotor axial (63) et un carter (60), dans l'espace intérieur duquel est disposé le rotor axial (63), le carter (60) comportant sur un côté frontal (651) une tête d'entrée (61), et comprenant un tambour d'amenée (43) qui précède le dispositif de séparation (6) et est prévu pour amener un flux de produit récolté (3) au dispositif de séparation (6), **caractérisée en ce qu'**au tambour d'amenée (43) est associé un segment d'entrée (62) par l'intermédiaire duquel le flux de produit récolté (3) est amené à la tête d'entrée (61), le segment d'entrée (62) et/ou des parties (622-624) de celui-ci étant disposé(es) dans la moissonneuse-batteuse (1) de manière échangeable et/ou réglable, le segment d'entrée (62) étant disposé au-dessous du tambour d'amenée (43) et avant le dispositif de séparation (6), et le segment d'entrée (62) et/ou ses parties (622-624) étant disposé(es) dans la moissonneuse-batteuse (1) de manière échangeable et/ou réglable en fonction du produit récolté, des conditions de récolte, de son usure et/ou du débit de produit récolté.

2. Moissonneuse-batteuse automotrice (1) selon la revendication 1, **caractérisée en ce qu'**elle inclut un capteur (9) avec lequel un débit de produit récolté peut être mesuré et qui est disposé sur le segment d'entrée (62).

3. Moissonneuse-batteuse automotrice (1) selon une des revendications précédentes, **caractérisée en ce que** le segment d'entrée (62) inclut des parties échangeables et/ou réglables qui sont un ou plusieurs éléments de guidage (622), rampes (624) et/ou lames (623)

4. Moissonneuse-batteuse automotrice (1) selon une des revendications précédentes, **caractérisée en ce que** le segment d'entrée (62) et/ou des parties (622-624) de celui-ci sont disposé(es) dans la moissonneuse-batteuse (1) de manière réglable, et **en ce que** la moissonneuse-batteuse inclut un premier mécanisme de réglage (8) pour régler le segment d'entrée (62) et/ou ses parties (622-624) .

5. Moissonneuse-batteuse automotrice (1) selon la revendication 4, **caractérisée en ce que** le premier mécanisme de réglage (8) est réglable manuellement et/ou automatiquement.

6. Moissonneuse-batteuse automotrice (1) selon une des revendications 4-5, **caractérisée en ce que** le premier mécanisme de réglage (8) inclut une protection anti-surcharges (91) qui cède en cas de surcharge du produit récolté.

7. Moissonneuse-batteuse automotrice (1) selon une des revendications 4 à 6, **caractérisée en ce qu'**elle inclut une commande d'outils (14) pour la commande automatique d'organes (41, 42, 43, 63) de la moissonneuse-batteuse (1), laquelle est également conçue pour le réglage du premier mécanisme de réglage (8).

8. Moissonneuse-batteuse automotrice (1) selon la revendication 7, **caractérisée en ce que** la commande d'outils (14) est prévue pour la commande automatique de la vitesse de tambours (41, 42, 43) d'un système de battage (4) et/ou du rotor axial (63).

9. Moissonneuse-batteuse automotrice (1) selon une des revendications 2-8, **caractérisée en ce que** le capteur (9) détecte une force du flux de produit récolté (3) agissant sur le segment d'entrée (62) .

10. Moissonneuse-batteuse automotrice (1) selon la revendication 9, lorsqu'elle est dépendante d'une des revendications 4-8, **caractérisée en ce que** le premier mécanisme de réglage (8) utilise au moins en partie des composants (74, 75) d'un second mécanisme de réglage (7) pour régler un contre-batteur (5) du système de battage (4).

11. Procédé de commande d'une moissonneuse-batteuse automotrice (1) selon une des revendications précédentes, dans laquelle un débit de produit récolté est mesuré au moyen d'un capteur de débit (9) disposé sur le segment d'entrée (62), une distance (a2) du segment d'entrée (62) et/ou de ses parties (622-624) au tambour d'amenée 43 étant commandée en fonction du débit de produit récolté détecté.
